(19) Europäisches Patentamt / European Patent Office / Office européen des brevets

(11) **EP 4 494 871 A1**

(12) **EUROPEAN PATENT APPLICATION**
published in accordance with Art. 153(4) EPC

(43) Date of publication:
**22.01.2025 Bulletin 2025/04**

(21) Application number: **23770804.5**

(22) Date of filing: **14.03.2023**

(51) International Patent Classification (IPC):
*B32B 27/36* (2006.01)    *B32B 27/00* (2006.01)
*B32B 27/18* (2006.01)    *B65D 65/40* (2006.01)
*C08J 7/054* (2020.01)

(52) Cooperative Patent Classification (CPC):
**B32B 27/00; B32B 27/18; B32B 27/36;**
**B65D 65/40; C08J 7/054**

(86) International application number:
**PCT/JP2023/009931**

(87) International publication number:
**WO 2023/176851 (21.09.2023 Gazette 2023/38)**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**KH MA MD TN**

(30) Priority: **16.03.2022  JP 2022041885**

(71) Applicant: **Toyobo Co., Ltd.**
**Kita-ku**
**Osaka-shi, Osaka 530-0001 (JP)**

(72) Inventors:
• **TAMARI, Noboru**
  **Inuyama-shi, Aichi 484-8508 (JP)**
• **GOTO, Takamichi**
  **Inuyama-shi, Aichi 484-8508 (JP)**

(74) Representative: **Vossius & Partner**
**Patentanwälte Rechtsanwälte mbB**
**Siebertstrasse 3**
**81675 München (DE)**

(54) **LAMINATED FILM, LID MATERIAL FOR FOOD PACKAGING CONTAINER, AND FOOD PACKAGING CONTAINER**

(57)    To provide a laminated film having high anti-fogging property, ease of opening, impact resistance, and blocking resistance. A laminated film including at least a substrate layer and an anti-fogging layer, wherein the film has a heat seal strength of 2.0 N/15mm or more and 12.0 N/15mm or less by heat sealing at any temperature of 120°C, 140°C, 160°C, and 180°C: a water contact angle of 50° or less under conditions of 5°C and 50% R.H.: a peel strength between an anti-fogging layer surface and a substrate layer surface of the film of 1 N/15mm or less: an impact strength of 0.5 J or more under a condition of 5°C: a tear strength of 100 mN or more in both the MD and TD directions of the film under a condition of 5°C: a thickness of the anti-fogging layer of 0.3 $\mu$m or more and less than 3.0 $\mu$m: and the substrate layer including a polyester resin containing a plant-derived ethylene glycol unit as a diol unit.

**EP 4 494 871 A1**

**Description**

TECHNICAL FIELD

The present invention relates to a laminated film having ease of opening, an anti-fogging property, and eco-friendly feature. More specifically, the present disclosure relates to a laminated film used for thermal adhesion to a packaging container. In particular, the present disclosure relates to a laminated film for a lid material of a food packaging container.

BACKGROUND ART

As materials for packaging fruits and vegetables, containers molded from plastic films and sheets have been used. Containers made from polyester materials such as polyester terephthalate has widely been used due to its excellent appearance in transparency and glossiness as well as recyclability. The polyester container has been used with a so-called fitting lid that securely fits to the container. However, the use of fitting lid disadvantageously has the risk of splashing of contents when the fitting lid falls off due to external stress, in addition to the risk of contamination of a foreign object penetrating into displayed goods when the lid is deliberately opened. Alternatively, top-seal films have recently been used as lid materials. In order to use a film as a top-seal film, the film needs to have characteristics such as an anti-fogging property, ease of opening, impact resistance, and blocking resistance. The anti-fogging property can prevent fogging of a lid material due to vapor generated from the contents such as fruits and vegetables, for example, salad, and can prevent invisibility of the contents during storage and display. The ease of opening indicates whether or not a lid material can be easily and neatly opened from a container without tearing. The impact resistance indicates whether or not a damage of a lid material occurs when subjected to external impact during transport and loads of commodities stacked for display. The blocking resistance can prevent blocking, which affects the operability, between parts of a top-seal film including a heat-seal layer during storage of the top-seal film in the form of a roll.

In recent years, there has been a growing expectation for a transition to a "Sound Material-Cycle Society" along with a departure from fossil fuel in the field of materials, and the use of biomass has attracted attention. The practical application of biomass plastic made from a biomass-derived raw materials has been rapidly advancing, and the production of polyester, a general-purpose polymer material, from these biomass-derived raw materials has been actively attempted.

For example, a biomass ethanol, produced by microbial fermentation of starches and sugars originating from plants such as corn and sugarcane, has already been practiced, and the industrial production of ethylene glycol from the biomass ethanol via ethylene has also been successfully achieved.

In Patent Document 1, it is suggested that an adhesive composition including a polyester resin A having a glass transition temperature ranging from -30°C to 30°C and an anti-fogging agent C can be suitably used for adhering a lid material film to a food packaging container. The lid material film has high heat seal strength and anti-fogging property, and the film is expected to have high impact resistance due to a biaxially oriented polyester film used in the lid material. However, the biaxially oriented polyester film used in the lid material is a typical biaxially stretched film, and its production method often causes reduction in tear strength. Thus, it is expected that the lid material film will easily tear when the fracture resulting from the removal of the lid material film from the container propagates through the lid material film, and the ease of opening will not be achieved.

In Patent Document 2, it is suggested that a polyester based lid material including a sealing layer and a substrate layer has good heat sealability to a container and high anti-fogging property. Since the lid material film has high anti-fogging property and the lid material film includes a biaxially oriented polyester film, the lid material film is expected to have high impact resistance. On the other hand, since the lid material film has a significantly high heat seal strength, it is expected that the lid material film will not be easily removed when opening a container. It is also expected that the heat seal strength will not be maintained at a desired value in the practical production process, because the heat seal strength may well greatly change in response to changes in heat seal temperature even in the cases of lid material films with low heat seal strength produced in Examples. Further, a copolymerized polyester resin is used in the sealing layer, and the resulting biaxially oriented polyester film is expected to have increased thickness variation. A large thickness variation may cause blocking between the sealing layers when stored in a roll form, resulting in a significant impact on operability.

In Patent Document 3, it is suggested that a laminated film including a substrate layer of a biaxially oriented polyester film and a heat sealable outer layer of an off-line coated polyester resin layer shows high heat sealability to a food tray. Although the laminated film has a high heat seal strength and anti-fogging property, the biaxially oriented polyester film used as the substrate layer is a typical biaxially stretched film and the substrate layer is expected to tear when removed to open the container, and the ease of opening is not achieved. In addition, since the polyester resin used in the heat sealing outer layer has Tg of from 0°C to 30°C and only single resin is used in the heat sealing outer layer, the resulting laminated film is expected to have low blocking resistance.

CITATION LIST

PATENT DOCUMENTS

Patent Document 1: WO 2008/179689
Patent Document 2: JP-A-2018-114992
Patent Document 3: JP-A-2017-209996

SUMMARY OF THE INVENTION

PROBLEMS TO BE SOLVED BY THE INVENTION

It is an object of the present invention to provide a laminated film having high anti-fogging property, enhanced ease of opening, improved impact resistance, high blocking resistance, and eco-friendly feature. Additionally, a laminated film produced by using a biomass-derived raw material is provided. Furthermore, a lid material (also referred to as a top-seal material), for a food packaging container including the laminated film is provided.

SOLUTION TO THE PROBLEMS

The present inventors have found that a substrate film having a good balance between an impact resistance and a tear strength can be obtained by using a biomass-derived resin as a raw material and employing specific film forming conditions. The present inventors have also found that a laminated film best suited as a lid material film for a polyester container can be obtained by combining an anti-fogging layer containing at least two polyester resins each having a different glass transition temperature with the substrate film. The present inventors conducted further extensive research based on this finding and accomplished the present invention represented by the following embodiments.
[1] A laminated film including at least a substrate layer and an anti-fogging layer, wherein the laminated film satisfies the following (a) to (g):

(a) when 15 mm wide test pieces are each formed by a method including heat sealing an anti-fogging layer surface of the laminated film to a 200 $\mu$m thick unstretched polyethylene terephthalate sheet at any temperature of 120°C, 140°C, 160°C, and 180°C at 0.2 MPa for 1 second, a heat seal strength between the laminated film and the unstretched polyethylene terephthalate sheet in each of the test pieces is 2.0 N/15mm or more and 12.0 N/15mm or less;
(b) a water contact angle of 50° or less 5 seconds after placing 1 $\mu$l droplet of distilled water on a surface of the anti-fogging layer under conditions of 5°C and 50% R.H.;
(c) when an anti-fogging layer surface of a piece of the laminated film and a substrate layer surface of another piece of the laminated film are stacked, placed at 40°C under a load of 450 kgf/m$^2$ for 1 week, and formed to be a 15 mm wide test piece, a peel strength between the piece and the another piece of the test piece is 1 N/15mm or less;
(d) an impact strength by pendulum impact test is 0.5 J or more under a condition of 5°C;
(e) a tear strength is 100 mN or more in both of an MD direction and a TD direction of the laminated film under a condition of 5°C;
(f) a thickness of the anti-fogging layer is 0.3 $\mu$m or more and less than 3.0 $\mu$m; and,
(g) the substrate layer comprises a polyester resin containing a plant-derived ethylene glycol unit as a diol unit.

According to [1], the heat seal strength achieved by heat sealing at any temperature of 120°C, 140°C, 160°C, and 180°C is 2.0 N/15mm or more and 12.0 N/15mm or less; therefore, the lid material and the container can have an adequate heat seal strength, and the lid material can be easily removed without tearing when opening the container.
According to [1], the water contact angle measured 5 seconds after placing 1 $\mu$l droplet of distilled water on a surface of the anti-fogging layer is 50° or less, and thus the laminate film has high anti-fogging property.
According to [1], when the peel strength between the anti-fogging layer surface of a piece of the laminated film and the substrate layer surface of another piece of the laminated film are stacked, the peel strength is 1 N/15mm or less, and blocking between parts of the film is prevented.
According to [1], the impact strength under a condition of 5°C is 0.5 J or more, thus the laminated film withstands external impact, and the lid materials is effectively prevented from tearing.

According to [1], the tear strength under a condition of 5°C is 100 mN or more in both of the MD direction and the TD direction of the laminated film, and the laminated film achieves ease of opening. That is, the lid material is prevented from tearing when the fracture due to removal of the lid material from the container propagates in the laminated film upon opening the container.

According to [1], the thickness of the anti-fogging layer is 0.3 $\mu$m or more and less than 3.0 $\mu$m, and both of the heat sealability and the blocking resistance can be achieved.

According to [1], the substrate layer contains a plant-derived ethylene glycol unit as a diol unit, thereby contributing to carbon neutrality.

The embodiments preferably have any one of features specified by the following [2] and onwards. [2] The laminated film according to [1], wherein the substrate layer has a degree of biomass of 10% or more and 20% or less.

According to [2], the use of biomass-derived raw material in the substrate layer can contribute to carbon neutrality.

[3] The laminated film according to [1] or [2], wherein a ratio (tear strength $_{MD}$/tear strength $_{TD}$) of a tear strength in the MD direction with respect to a tear strength in the TD direction of the laminated film is 0.6 or more and 1.5 or less under a condition of 5°C.

According to [3], the isotropic orientation between the MD direction and the TD direction of the laminated film can be achieved, thereby enabling the ease of opening regardless of the opening direction of the lid material.

[4] The laminated film according to any one of [1] to [3], wherein the laminated film has an orientation coefficient calculated according to Equation (1) from refractive indexes measured with an Abbe refractometer of 0.6 or more and 1.5 or less:

$$\text{Equation (1): Orientation coefficient} = \{Nx - (Ny + Nz)/2\}/\{Ny - (Nx + Nz)/2\}$$

where Nx is a refractive index in the MD direction of the film, Ny is a refractive index in the TD direction of the film, and Nz is a refractive index in a thickness direction of the film.

According to [4], the isotropic orientation between the MD direction and the TD direction of the laminated film is achieved, thereby enabling the ease of opening regardless of the opening direction of the lid material.

[5] The laminated film according to any one of [1] to [4], wherein the substrate layer is a biaxially oriented polyester film.

[6] The laminated film according to any one of [1] to [5], wherein the anti-fogging layer contains at least a polyester resin (A) having a glass transition temperature Tg of 0°C or higher and 40°C or lower, and a polyester resin (B) having a glass transition temperature Tg of 41 °C or higher and 80°C or lower.

[7] The laminated film according to [6], wherein a mass ratio of the polyester resin (A) to the polyester resin (B) in resins constituting the anti-fogging layer is from 50/50 to 90/10.

According to [6] and [7], the anti-fogging layer contains at least two polyester resins each having a different glass transition temperature, and thus the heat sealability and the prevention of tearing of the lid material upon opening the container can be achieved.

[8] The laminated film according to [6] or [7], wherein the anti-fogging layer contains a nonionic surfactant.

[9] The laminated film according to [8], wherein the nonionic surfactant has an HLB value of 3 or more and 10 or less.

According to [8] and [9], the laminated film can have an anti-fogging property.

[10] The laminated film according to any one of [1] to [9], wherein the laminated film has a thickness variation of 5% or less.

[11] The laminated film according to any one of [1] to [10], wherein the laminated film has a haze of less than 10%.

[12] The laminated film according to any one of [1] to [11], wherein the laminated film includes the adhesion layer, the substrate layer, and a printed layer.

Further, the embodiment provides a lid material for a food packaging container including the laminated film. A lid material for a food packaging container, including the laminated film according to any one of [1] to [12].

Furthermore, the embodiment provides a food packaging container including the lid material including the laminated film.

A food packaging container including the lid material according to [13].

ADVANTAGEOUS EFFECTS OF THE INVENTION

Using a biomass-derived raw material can provide a laminated film and a lid material that can contribute to carbon-neutrality and have high anti-fogging property, increased ease of opening, improved impact resistance, and high blocking resistance.

BRIEF DESCRIPTION OF DRAWINGS

[FIG. 1] FIG. 1 is a schematic diagram illustrating a straight stretching pattern in the TD direction, in the production process of the film.
[FIG. 2] FIG. 2 is a schematic diagram illustrating a multi stage stretching pattern in the TD direction, in the production process of the film.
[FIG. 3] FIG. 3 is a schematic diagram illustrating the logarithmic stretching pattern in the TD direction, in the production process of the film.
[FIG. 4] FIG. 4 is a schematic diagram illustrating the shape of an A-PET container used to evaluate the ease of opening in Examples.

DESCRIPTION OF EMBODIMENTS

[Anti-fogging layer]

In one or more embodiments, an anti-fogging layer in a laminated film preferably contains at least the following polyester resin (A), polyester resin (B), and anti-fogging agent (C) component. The polyester resin (A) and the polyester resin (B) components in the anti-fogging layer enable enhanced ease of opening, a broad range of heat sealing temperature, and high blocking resistance, and the anti-fogging agent (C) component in the anti-fogging layer further enables excellent anti-fogging property. Further, the anti-fogging layer may also contain an anti-blocking agent (D) to improve blocking resistance.

Each of the polyester resin (A) and the polyester resin (B) is preferably a polyester having a chemical structure formed by polycondensation between a carboxylic acid component including a divalent or higher polycarboxylic acid compound and an alcohol component including a divalent or higher polyol compound. In the case of the polyester having the chemical structure, the polyester is preferably a copolymerized polyester resin formed from at least one polycarboxylic acid compound and at least two polyol compounds, at least two polycarboxylic acid compounds and at least one polyol compounds, or at least two polycarboxylic acid compounds and at least two polyol compounds. The polyester is preferably a copolymerized polyester resin formed mainly from at least one dicarboxylic acid component and at least one glycol component when the polyester is formed from at least one polycarboxylic acid compound and at least one polyol compound. Here, the term "mainly" means that the total amount of the dicarboxylic acid component and the glycol component accounts for 100 mol% or more on a molar basis, with respect to 200 mol% of the total amount of the entire acid component and the entire alcohol component forming the polyester resin (A).

The dicarboxylic acid is preferably an aromatic dicarboxylic acid or an aliphatic dicarboxylic acid, and more preferably an aromatic dicarboxylic acid. The lower limit of the copolymerization amount of the aromatic dicarboxylic acid is preferably 40 mol%, more preferably 45 mol%, and particularly preferably 50 mol% with respect to the total amount of the carboxylic acid component taken as 100 mol%. By adjusting the copolymerization amount to 40 mol% or more, a glass transition temperature Tg can be lowered.

Specific examples of the aromatic dicarboxylic acid include terephthalic acid, isophthalic acid, orthophthalic acid, and naphthalene dicarboxylic acid, and the aromatic dicarboxylic acid is not limited thereto. Specific examples of the aliphatic dicarboxylic acid include succinic acid, adipic acid, azelaic acid, sebacic acid, and dodecanedicarboxylic acid, and the aliphatic dicarboxylic acid is not limited thereto. These dicarboxylic acids may be used alone or in combination of two or more. Examples of other polycarboxylic acid components include aromatic oxycarboxylic acids such as p-hydroxybenzoic acid and p-(hydroxyethoxy)benzoic acid; unsaturated alicyclic dicarboxylic acids such as fumaric acid, maleic acid, itaconic acid, hexahydrophthalic acid, and tetrahydrophthalic acid; and alicyclic dicarboxylic acids such as 1,2-cyclohexane dicarboxylic acid, 1,3-cyclohexane dicarboxylic acid, and 1,4-cyclohexane dicarboxylic acid. Further, tri- or tetracarboxylic acids such as trimellitic acid, trimesic acid, and pyromellitic acid, and anhydrides thereof may also be used, if needed.

The glycol component is preferably an aliphatic glycol. The lower limit of the copolymerization amount of the aliphatic glycol component is preferably 70 mol%, more preferably 75 mol%, and particularly preferably 80 mol% with respect to the total amount of the glycol component taken as 100 mol%. By adjusting the copolymerization amount to 70 mol% or more, Tg can be lowered.

Specific examples of the aliphatic glycol include ethylene glycol, propylene glycol, 1,3-propanediol, 2,2-dimethyl-1,3-propanediol, 2-methyl-1,3-propanediol, 1,4-butanediol, 1,5-pentanediol, 1,6-hexanediol, 3-methyl-1,5-pentanediol, diethylene glycol, triethylene glycol, dipropylene glycol, polyethylene glycol, polypropylene glycol, and polytetramethylene glycol, and the aliphatic glycol is not limited thereto. These glycol components may be used alone or in combination of two or more. In addition, other glycol components such as 1,2-cyclohexanedimethanol, 1,3-cyclohexanedimethanol, 1,4-cyclohexanedimethanol, tricyclodecanediol, ethylene oxide adduct of bisphenol A, propylene oxide adduct of bisphenol A, ethylene oxide adduct of hydrogenated bisphenol A, and propylene oxide adduct of hydrogenated bisphenol may also be used. Further, small amounts of triols and tetraols such as trimethylolethane, trimethylolpropane, glycerin, and pentaerythritol may also be used, if needed.

The polyester resin (A) has a glass transition temperature Tg of preferably 0°C or higher and 40°C or lower, more preferably 5°C or higher and 35°C or lower, and particularly preferably 10°C or higher and 30°C or lower. By adjusting the glass transition temperature to 0°C or higher, the blocking resistance can be improved. By adjusting the glass transition temperature to 40°C or lower, the heat seal strength can be controlled to a predetermined range, and the ease of opening can be achieved.

The polyester resin (A) has the lower limit of the reduced viscosity ($\eta$sp/c) of preferably 0.2 dl/g, more preferably 0.4 dl/g, and particularly preferably 0.6 dl/g. By adjusting the reduced viscosity to 0.2 dl/g or more, the cohesive force of the resin can be developed, allowing the heat seal strength to be developed.

The polyester resin (A) has a number average molecular weight (Mn) of preferably 5000 or more, more preferably 10000 or more, and particularly preferably 15000 or more. By adjusting the number average molecular weight to 5000 or more, the cohesive force of the resin can be developed, allowing the heat seal strength to be developed. The upper limit of the number average molecular weight is not particularly limited, and is preferably 50000 or less, more preferably 40000 or less.

The polyester resin (B) has a glass transition temperature of preferably 41°C or higher and 80°C or lower, more preferably 46°C or higher and 75°C or lower, and particularly preferably 51°C or higher and 60°C or lower. By adjusting the glass transition temperature to the above range, the heat seal strength can be set within the range specified by the claim, and the ease of opening can be achieved.

The polyester resin (B) has the lower limit of the reduced viscosity ($\eta$sp/c) of preferably 0.1 dl/g, more preferably 0.2 dl/g, and particularly preferably 0.3 dl/g. By adjusting the reduced viscosity to 0.1 dl/g or more, the cohesive force of the resin can be developed, allowing the heat seal strength to be developed.

The polyester resin (B) has a number average molecular weight (Mn) of preferably 2000 or more, more preferably 5000 or more, and particularly preferably 10000 or more. By adjusting the number average molecular weight to 2000 or more, the cohesive force of the resin can be developed, allowing the heat seal strength to be developed. The upper limit of the number average molecular weight is not particularly limited, and is preferably 30000 or less, more preferably 20000 or less.

By mixing at least two polyester resins each having a different glass transition temperature, the heat seal strength within a specific range can be achieved in a wide temperature range of from 120°C to 180°C, and the ease of opening can be achieved. The mechanism of the onset of the ease of opening resulting from mixing polyester resins each having a different glass transition temperature, presumably attributes to the cohesion failure that occurs selectively in the anti-fogging layer during the measurement of the heat seal strength. Typically, the fracture upon measuring the heat seal strength is said to proceed from the most mechanically weakest point. In the anti-fogging layer of the laminated film, the polyester resin (B) having a high glass transition temperature enables a high heat seal strength of a sealing surface, and the polyester resin (A) having a low glass transition temperature allows the mechanical strength of the anti-fogging layer to be decreased, i.e., the anti-fogging layer to have fragility. As a result, the mechanical strength of the heat seal strength becomes greater than the mechanical strength of the anti-fogging layer, and cohesion failure is generated selectively in the anti-fogging layer that has the lowest mechanical strength. Therefore, by mixing at least two polyester resins each having a different glass transition temperature, the cohesion failure is selectively generated in the anti-fogging layer independently of the heat seal temperature, allowing the ease of opening to be achieved over a wide range of temperatures.

The lower limit of the mass ratio of the polyester resin (A) with respect to the polyester resin (B) is preferably 50:50, more preferably 45:55, and particularly preferably 60:40. By adjusting the mass ratio to 50:50 or more, the anti-fogging layer can have fragility and the heat seal strength can be set within the range specified by the claim over a wide range of temperatures, allowing the ease of opening to be achieved. The upper limit of the mass ratio of the polyester resin (A) with respect to the polyester resin (B) is preferably 90:10, more preferably 85:15, and particularly preferably 80:20. By adjusting the mass ratio to 90:10 or less, the seal strength of the sealing surface can be increased and the heat seal strength can be set within the range specified by the claim over a wide range of temperatures, and the ease of opening can be achieved.

The anti-fogging agent (C) is not particularly limited as long as it provides an anti-fogging property. Examples of the anti-fogging agent (C) include anionic surfactants, nonionic surfactants, cationic surfactants, and amphoteric surfactants. Among them, nonionic surfactants are preferred.

Examples of the anionic surfactants include sulfuric acid ester salts of higher alcohols, higher alkyl-sulfonates, higher carboxylate, alkylbenzene sulfonates, polyoxyethylene alkyl sulfate salts, polyoxyethylene alkyl phenyl ether sulfate salts, and vinyl sulfosuccinates. Examples of the nonionic surfactants include compounds each having a polyoxyethylene structure such as polyoxyethylene alkyl ether, polyoxyethylene alkyl phenyl ether, polyethylene glycol fatty acid ester, an ethylene oxide-propylene oxide block copolymer, polyoxyethylene fatty acid amide, and an ethylene oxide- propylene oxide copolymer; and sorbitan derivatives. Examples of the cationic surfactants include alkylamine salts, dialkylamine salts, trialkylamine salts, alkyl trimethylammonium chlorides, dialkyl dimethylammonium chlorides, and alkyl benzalkonium chlorides. Examples of the amphoteric surfactants include lauryl betaine and lauryl dimethylamine oxide.

Specific examples of the nonionic surfactants include sorbitan-type surfactants such as sorbitan monostearate, sorbitan distearate, sorbitan monopalmitate, sorbitan dipalmitate, sorbitan monobehenate, sorbitan dibehenate, sorbitan monolaurate, and sorbitan dilaurate; glycerol-type surfactants such as glycerol monolaurate, glycerol dilaurate, diglycerol monopalmitate, diglycerol dipalmitate, glycerol monostearate, glycerol distearate, diglycerol monostearate, diglycerol distearate, diglycerol monolaurate, and diglycerol dilaurate; polyethylene glycol-type surfactants such as polyethylene glycol monostearate and polyethylene glycol monopalmitate; trimethylolpropane-type surfactants such as trimethylolpropane monostearate; diethanol alkylamine-type and diethanol alkylamide-type surfactants such as lauryl diethanolamine, oleyl diethanolamine, stearyl diethanolamine, lauryl diethanolamide, oleyl diethanolamide, and stearyl diethanolamide; pentaerythritol-type surfactants such as pentaerythritol monopalmitate; and polyoxyethylene sorbitan monostearate, polyoxyethylene sorbitan distearate, and mono- and distearate of a sorbitan-diglycerol condensate. These may be used alone or in combination of two or more.

Specific examples of the cationic surfactants include amine salts such as laurylamine acetate, triethanolamine monoformate, and stearamide ethyldiethylamine acetate; and quaternary ammonium salts such as lauryl trimethylammonium chloride, stearyl trimethylammonium chloride, dilauryl dimethylammonium chloride, distearyl dimethylammonium chloride, lauryl dimethyl benzylammonium chloride, and stearyl dimethyl benzylammonium chloride. These may be used alone or in combination of two or more.

The lower limit of the "Hydrophilic-Lipophilic Balance" (hereinafter merely "HLB") of the anti-fogging agent (C) is preferably 3, more preferably 4, and particularly preferably 5. By selecting an anti-fogging agent (C) with the HLB value of 3 or more, the laminated film can have anti-fogging property. The upper limit of the HLB of the anti-fogging agent (C) is preferably 10, more preferably 9, and particularly preferably 8. By selecting an anti-fogging agent (C) with the HLB value of 10 or less, the excessive deposition of the anti-fogging agent on the film surface can be prevented, and deterioration of haze and a decrease in the seal strength can be prevented.

The content of the anti-fogging agent (C) in the anti-fogging layer is preferably 1.0% by mass or more and 10.0% by mass or less, more preferably 1.5% by mass or more and 9.5% by mass or less, and particularly preferably 2.0% by mass or more and 9.0% by mass or less in a solid concentration. By adjusting the content to 1.0% by mass or more, the laminated film can have anti-fogging property. By adjusting the content to 10.0% by mass or less, the laminated film can have an appropriate haze, and a decrease in the heat seal strength due to excessive deposition of the anti-fogging agent on the surface of the anti-fogging layer can be prevented.

The anti-fogging layer may contain an anti-blocking agent (D). Examples of the anti-blocking agent include inorganic particles, organic particles, and waxes, and the anti-fogging layer may contain the anti-blocking agent to the extent that the heat seal strength is not decreased. These anti-blocking agents may be used alone or in combination of two or more. The lower limit of the content of the anti-blocking agent is preferably 0.1% by mass, more preferably 0.3% by mass, and particularly preferably 0.5% by mass in a solid concentration of the anti-fogging layer. By containing 0.1% by mass or more of the anti-blocking agent (D), the blocking resistance can be improved. The upper limit of the content of the anti-blocking agent is preferably 5.0% by mass, more preferably 4.5% by mass, and particularly preferably 4.0% by mass in a solid concentration of the anti-fogging layer. The content of the anti-blocking agent (D) of 5.0% by mass or less does not decrease the heat seal strength.

Examples of inorganic particles include a metal oxide, hydroxide, sulfate, carbonate, or silicate of, for example, magnesium, calcium, barium, zinc, zirconium, molybdenum, silicon, antimony, or titanium. Among them, silica gel particle is particularly preferred. The particle may have any shape, such as a powder, a bead, a granule, a flat plate, or a needle shape.

Examples of the organic particle include particles of polymer such as polymethyl methacrylate resin, polystyrene resin, nylon resin, melamine resin, benzoguanamine resin, phenol resin, urea resin, silicone resin, methacrylate resin, and acrylate resin; cellulose powder, nitrocellulose powder, wood powder, wastepaper powder, and starch. The particle may have any shape, such as a powder, a bead, a granule, a flat plate, or a needle shape.

Specific examples of the waxes include hydrocarbon-type waxes such as a liquid paraffin, a natural paraffin, a micro-wax, a synthetic paraffin, and a polyethylene wax; fatty acid-type waxes such as stearic acid; fatty acid amide-type waxes such as stearic amide, palmitic amide, methylene bisstearoamide, ethylene bisstearoamide, oleic amide, and esilic amide; ester-type waxes such as a lower alcohol ester of a fatty acid, a polyol ester of a fatty acid, and a fatty acid polyglycol ester; alcohol-type waxes such as cetyl alcohol and stearyl alcohol; an olefin-type wax; natural waxes such as a caster wax and a carnauba wax; and metal soaps derived from a fatty acid having 12 to 30 carbon atoms.

The anti-fogging layer is laminated on at least one side of the substrate layer. The anti-fogging layer may be laminated by the following methods including co-extrusion with a resin composition for forming the substrate layer, dry lamination of the substrate layer with the anti-fogging layer, extrusion coating of the anti-fogging layer onto the substrate layer, or solvent coating for the substrate layer. The laminated film can be obtained by preferably coating, i.e., applying a solution of an organic solvent dissolving the resin composition for forming the anti-fogging layer to the substrate layer, followed by drying the coating.

The lower limit of the thickness of the anti-fogging layer is preferably 0.3 μm or more, more preferably 0.5 μm or more, and particularly preferably 0.7 μm or more. By adjusting the thickness to 0.3 μm or more, the laminated film can have heat sealability. The upper limit of the thickness of the anti-fogging layer is preferably less than 3.0 μm, more preferably less than 2.8 μm, and particularly preferably less than 2.6 μm. By adjusting the thickness to less than 3.0 μm, the laminated film cam have high blocking resistance.

[Substrate layer]

The substrate layer of the laminated film is preferably a biaxially oriented polyester film for the purpose of increasing the impact resistance of the laminated film. If an unstretched polyester film is used as a substrate layer, the production method of the film may cause degraded impact resistance, and the laminated film may break when subjected to external impact and loads generated by stacking commodities for display. Further, in the case of the unstretched polyester film, the production method of the film may increase thickness variation, causing blocking between the laminated films when rolled. The method for producing the biaxially oriented polyester film is not particularly limited and may be produced by simultaneous biaxial stretching or sequential biaxial stretching. However, the inflation method is not preferred because the method may increase thickness variation and thus cause blocking between the laminated films when rolled.

The main constituent component of the substrate layer is not particularly limited as long as the main constituent component is polyester, and the main constituent component is preferably polyethylene terephthalate. The substrate layer may contain other polyester as long as the present invention is not impaired. Specific examples of the polyester include polyester resins such as polybutylene terephthalate, polyethylene naphthalate, polybutylene naphthalate, and polypropylene terephthalate; polyester resins formed by copolymerization of at least one dicarboxylic acid such as isophthalic acid, orthophthalic acid, naphthalene dicarboxylic acid, biphenyldicarboxylic acid, cyclohexanedicarboxylic acid, adipic acid, azelaic acid, and sebacic acid, with one or more other components; and polyester resins formed by copolymerization of at least one diol components such as ethylene glycol, 1,3-propylene glycol, 1,2-propylene glycol, neopentyl glycol, 1,5-pentanediol, 1,6-hexanediol, diethylene glycol, cyclohexanediol, polyethylene glycol, polytetramethylene glycol, and polycarbonate diol, with one or more other components.

The polyester used in the substrate layer preferably contains a biomass-derived ethylene glycol unit as a diol unit. The substrate layer preferably includes 50% by mass to 100% by mass of the polyester containing the biomass-derived diol unit.

A polyester raw material obtained by using the biomass-derived ethylene glycol preferably has the biomass-derived carbon content determined by radiocarbon $^{14}$C measurement of from 10% to 19% with respect to the total carbons of the polyester. A certain amount of $^{14}$C (105.5 pMC) is contained in the atmospheric carbon dioxide, and it is known that, for example, corn, a plant that absorbs carbon dioxide from the atmosphere to grow, contains approximately 105.5 pMC of $^{14}$C. Accordingly, the content of the biomass-derived carbon can be calculated by measuring the content of $^{14}$C in the total carbons of the polyester. The biomass-derived carbon content $P_{bio}$ is defined by the following equation, where the $^{14}$C content in the polyester is represented by $P_{c14}$.

$$P_{bio}(\%) = P_{c14}/105.5 \times 100$$

In the case of polyethylene terephthalate, which is obtained by polymerization of ethylene glycol having two carbon atoms and terephthalic acid having eight carbon atoms in the molar ratio of 1:1, the biomass-derived carbon content in polyester $P_{bio}$ is 20% when only biomass-derived ethylene glycol is used as ethylene glycol.

The substrate layer has a degree of biomass, which is the degree of biomass-derived carbon content determined by radiocarbon $^{14}$C measurement, of preferably 10% or more, more preferably 12% or more, and particularly preferably 14% or more with respect to the total carbons of the resin composition. A biomass-derived carbon content in the resin composition of 10% or more is sufficient to demonstrate eco-friendly effect. The upper limit of the degree of biomass is preferably 20%. When only biomass-derived ethylene glycol is used as ethylene glycol, the degree of biomass results in 20% or less.

Further, inorganic lubricants such as titanium dioxide, silica microparticle, kaolin, and calcium carbonate, or organic lubricants such as a long-chain fatty acid ester may be added to improve slipperiness. In addition, a coloring agent, an antistatic agent, and an ultraviolet absorber may also be added, if needed.

The layer structure of the substrate layer is not particularly limited, and the substrate layer may have a single-layer structure, a two-layer structure, a three-layer structure, a four-layer structure, or a super multilayer-structure. Each of the layer may have a different composition.

A method for producing the substrate layer is not particularly limited, and a T-die method is preferred to achieve high thickness accuracy. An inflation method may increase thickness variation due to its production process.

The upper limit of a cooling roll temperature is preferably 40°C or lower, and more preferably 20°C or lower. When the cooling roll temperature is 40°C or lower, the degree of crystallization can be prevented from being too high during solidification of the molten polyester resin composition by cooling, and stretching can be facilitated.

The lower limit of the stretching temperature in the longitudinal direction (MD direction) is preferably 90°C, more preferably 95°C, and particularly preferably 100°C. The stretching temperature of 90°C or higher can prevent breakage. The upper limit of the stretching temperature in the MD direction is preferably 140°C, more preferably 135°C, and particularly preferably 130°C. The stretching temperature of 140°C or lower enables sufficient orientation, allowing the biaxially oriented film to have increased impact strength.

The lower limit of the stretching ratio in the MD direction is preferably 3.0 times, more preferably 3.2 times, and partially preferably 3.4 times. The stretching ratio of 3.0 times or more can reduce thickness variation, and the blocking resistance can be improved. The upper limit of the stretching ratio in the MD direction is preferably 4.0 times, more preferably 3.8 times, and particularly preferably 3.6 times. By controlling the stretching ratio to 4.0 times or less, breakage can be prevented.

The lower limit of the stretching temperature in the width direction (TD direction,) is preferably 100°C, more preferably 105°C, and particularly preferably 110°C. By controlling the stretching temperature to 100°C or higher, breakage can be prevented. The upper limit of the stretching temperature in the TD direction is preferably 140°C, more preferably 135°C, and particularly preferably 130°C. The stretching temperature of 140°C or lower enables sufficient orientation, allowing the biaxially oriented film to have increased impact strength.

The lower limit of the stretching ratio in the TD direction is preferably 3.5 times, more preferably 3.6 times, and particularly preferably 3.7 times. The stretching ratio of 3.5 times or more can reduce the thickness variation, and the blocking resistance can be improved. The upper limit of the stretching ratio in the MD direction is preferably 4.5 times, more preferably 4.4 times, and particularly preferably 4.3 times. By adjusting the stretching ratio to 4.5 times or less, breakage can be prevented.

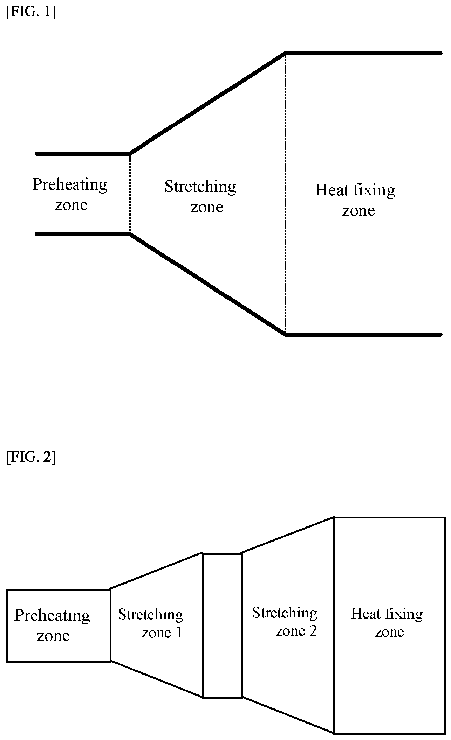

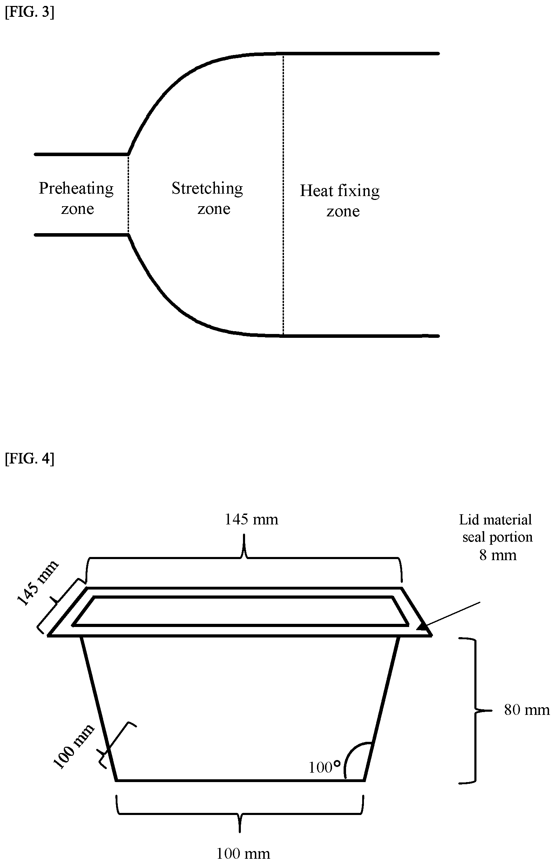

The laminated film preferably has the impact strength balanced with tear strength and also has decreased thickness variation. In particular, film forming conditions of the substrate layer has great impact on the thickness variation, and the stretching process in the TD direction has the greatest impact on the thickness variation. For example, an increase in the stretching ratio in the TD direction increases impact strength and reduces thickness variation, but adversely reduces tear strength. In the stretching process in the TD direction, a multi-stage stretching pattern shown in Fig. 2 or a logarithmic stretching patter shown in Fig. 3 may preferably be employed. When a typical straight form of a stretching pattern shown in Fig. 1 is employed for stretching in the TD direction, the stretching ratio needs to be lowered to balance the impact strength and the tear strength. However, this may cause an increase in thickness variation, resulting in worsened blocking resistance. Conversely, in the case of stretching in the TD direction of multi-stage or logarithmic pattern, orientation of the film can be prevented without decreasing the stretching ratio, allowing the impact strength to be balanced with the tear strength and the thickness variation to be reduced.

In the multi-stage stretching in the TD direction, the number of stages is preferably two or more and five or less. In the multi-stage stretching, a stretching stress can be varied by changing a stretching temperature at each stage, and orientation can be prevented. As shown in Fig. 2, the multi-stage stretching preferably has zones for holding a film at a fixed width after the end of each stretching stage. Further, the stretching temperature gradually lowers from the first stage to the final stage with a temperature difference between adjacent stages of 2°C or higher, which is preferred temperature pattern.

The lower limit of the heat setting temperature is preferably 180°C, more preferably 190°C, and particularly preferably 200°C. The heat setting temperature of 180°C or higher enables decreased heat shrinkage rate. The upper limit of the heat setting temperature is preferably 240°C, more preferably 230°C, and particularly preferably 220°C. By setting the heat setting temperature to 240°C or lower, impact strength can be prevented from being decreased.

The lower limit of the relaxation rate is preferably 0.5%, more preferably 1.0%, and particularly preferably 2.0%. The relaxation rate of 0.5% or more allows the heat shrinkage rate to be kept low. The upper limit of the relaxation rate is preferably 10%, more preferably 8%, and particularly preferably 6%. By controlling the relaxation rate to 10% or less, the film can be prevented from sagging and blocking when rolled.

The lower limit of the thickness of the substrate layer is preferably 5 $\mu$m, more preferably 10 $\mu$m, and particularly preferably 15 $\mu$m. By adjusting the thickness to 5 $\mu$m or more, the laminated film can have adequate impact strength and tear strength. The upper limit of the thickness of the substrate layer is preferably 100 $\mu$m, more preferably 80 $\mu$m, and

particularly preferably 50 μm. By adjusting the thickness to 100 μm or less, the laminated film can be suitably used as the lid material.

[Laminated film]

The water contact angle is measured under conditions of a measurement temperature of 5°C and a relative humidity of 50% (50%R.H.). A-PET containers packaging foods such as salad are generally stored and displayed under refrigeration condition, where anti-fogging property plays an important role. Hence, a temperature condition of 5°C, rather than a typical room temperature condition, is more appropriate for the measurement condition of the water contact angle, because the temperature condition is appropriate to evaluate the anti-fogging property under refrigerated conditions.

The upper limit of the water contact angle of the laminated film is preferably 50°, more preferably 40°, and particularly preferably 30°. By controlling the water contact angle to 50° or less, water droplets can be thinly spread even when the water vapour dispersed from contents adheres to the laminated film and forms the water droplets, and fogging of the container appearance can be prevented. The lower limit of the water contact angle of the laminated film is preferably 10°, more preferably 15°, and particularly preferably 20°. By controlling the water contact angle to 10° or more, a decrease in the heat seal strength due to excessive deposition of the anti-fogging agent on the surface can be prevented.

When the laminated film is heat sealed with a 200 μm thick unstretched polyethylene terephthalate sheet at any temperature of 120°C, 140°C, 160°C, and 180°C, the lower limit of a heat seal strength is preferably 2 N/15mm, more preferably 3 N/15mm, and particularly preferably 4 N/15mm. The heat seal strength of 2 N/15mm or more enables heat sealing with adequate strength for use as a lid material.

When the laminated film is heat sealed with a 200 μm thick unstretched polyethylene terephthalate sheet at any temperature of 120°C, 140°C, 160°C, and 180°C, the upper limit of a heat seal strength is preferably 12 N/15mm, more preferably 11 N/15mm, and particularly preferably 10 N/15mm. By setting the heat seal strength to 12 N/15mm or less, the seal strength can be prevented from being too high, allowing the container to be opened without much force and preventing the laminated film from tearing.

The laminated film has a feature that a certain degree of heat seal strength can be achieved over a wide range of temperatures by deliberately inducing cohesion failure in the anti-fogging layer, when the laminated film used as a lid material of an A-PET container is opened.

When the anti-fogging layer surface of a piece of the laminated film and the substrate layer surface of another piece of the laminated film are stacked, placed at 40°C under a load of 450 kgf/m$^2$ for 1 week, the upper limit of the peel strength is 1 N/15mm, more preferably 0.8 N/15mm, and particularly preferably 0.6 N/15mm. By controlling the peel strength to 1 N/15mm or less, troubles in processing, such as tearing due to blocking between parts of an unwound film can be prevented when the film is unwound from a roll. Blocking between films can be effectively prevented by mixing at least two polyester resins each having a different glass transition temperature in the anti-fogging layer.

The lower limit of the impact strength of the laminated film is 0.5 J, more preferably 0.6 J, and particularly preferably 0.8 J. By adjusting the impact strength to 0.5 J or more, the laminated film can have enough strength to withstand external stress due to transport and display of the container, and the lid material can be prevented from tearing.

The lower limit of the tear strength of the laminated film is 100 mN, more preferably 110 mN, and particularly preferably 120 mN. By adjusting the tear strength to 100 mN or more, the substrate layer can be prevented from tearing when the cohesion failure generated in the anti-fogging layer upon opening the container propagates to the substrate layer, and enhanced ease of opening can be achieved.

The lower limit of the ratio (tear strength$_{MD}$/tear strength$_{TD}$) of the tear strength in the MD direction with respect to the tear strength in the TD direction of the laminated film is 0.6, more preferably 0.7, and particularly preferably 0.8. By adjusting the ratio to 0.6 or more, the laminated film can have isotropic orientation, enabling the ease of opening. In general, the way of opening lid materials slightly changes from person to person, i.e., forces are randomly applied to the lid material in the vertical and horizontal direction. Hence, highly anisotropic orientation may lead to easy tearing of a lid material.

The upper limit of the ratio (tear strength$_{MD}$/tear strength$_{TD}$) of the tear strength in the MD direction with respect to the tear strength in the TD direction of the laminated film is 1.5, more preferably 1.3, and particularly preferably 1.1. By setting the ratio to 1.5 or less, the laminated film can have isotropic orientation, and the ease of opening can be achieved.

The lower limit of the orientation coefficient according to the following Equation (1) is 0.6, more preferably 0.7, and particularly preferably 0.8 when the laminated film is measured with an Abbe refractometer.

$$\text{Equation (1): orientation coefficient} = \{Nx - (Ny + Nz)/2\}/\{Ny - (Nx + Nz)/2\}$$

Nx: Refractive index in the MD direction of the film
Ny: Refractive index in the TD direction of the film

Nz: Refractive index in the thickness direction of the film

By setting the orientation coefficient to 0.6 or more, the laminated film can have isotropic orientation, and the ease of opening can be achieved.

The upper limit of the orientation coefficient according to Equation (1) is 1.5, more preferably 1.3, and particularly preferably 1.1 when measured using an Abbe refractometer. By setting the orientation coefficient to 1.5 or less, the laminated film can have isotropic orientation, and the ease of opening can be achieved.

The upper limit of the thickness variation of the laminated film is 5%, more preferably 4%, and particularly preferably 3%. By controlling the thickness variation to 5% or less, troubles in processing, such as tearing of unwound film due to blocking can be prevented, when the laminated film is in a roll form and local stress applies to a film portion having high thickness variation.

The upper limit of the haze of the laminated film is preferably 10% or less, more preferably 8%, and particularly preferably 6%. The haze of 10% or less allows the laminated film to have high transparency when used as the lid material, and the contents can be sufficiently seen through the lid material.

The laminated film can be suitably used as a packaging material, specifically as a lid material for a food packaging container. When the laminated film is used as a lid material for a food packaging container, the anti-fogging layer surface of the laminated film is preferably contacted and hermetically sealed with an opening edge of the container. The type of the food packaging container with which the lid material of the laminated film is used is not particularly limited, and the food packaging container is preferably a polyester container, and particularly preferably an A-PET (amorphous polyethylene terephthalate) container.

EXAMPLES

The followings are methods for evaluating physical properties.

[Thickness of substrate layer]

The thickness of the substrate layer was measured using an electronic micrometer "Millitron" (model: 1202D, manufactured by Seiko EM Co.,Ltd.) before laminating the anti-fogging layer.

[Thickness of anti-fogging layer]

The thickness of the laminated film (substrate layer + anti-fogging layer) was measured using an electronic micrometer "Millitron" (model: 1202D, manufactured by Seiko EM Co.,Ltd.). Subsequently, the anti-fogging layer side of the laminated film was wiped with a solvent capable of dissolving the anti-fogging layer to completely remove the anti-fogging layer. The thickness of the film obtained by removing the anti-fogging layer was measured in the same manner, and the thickness of the anti-fogging layer was calculated according to the following Equation (2).

Thickness of anti-fogging layer ($\mu$m) = thickness of laminated film ($\mu$m) -thickness of film obtained by removing anti-fogging layer ($\mu$m)     Equation (2)

[Degree of biomass of substrate layer]

The degree of biomass was measured in accordance with ASTM D6866.

[Haze of laminated film]

The laminated film was cut out into a square having a side of 10 cm, and the haze of the resulting test piece was measured using a haze meter (model: NDH2000, manufactured by NIPPON DENSHOKU INDUSTRIES Co.,Ltd.) in accordance with JIS K 7361-1. The haze was measured at six points of the test piece, and the average of the measured values was determined to be an actual haze measurement value.

[Heat seal strength]

The anti-fogging layer surface of the laminated film was stacked on a 200 $\mu$m thick unstretched polyethylene terephthalate sheet, and adhered by a heat sealer, under conditions of an upper seal bar temperature of from 120°C to 180°C at 20°C intervals, a lower seal bar temperature of 30°C, a pressure of 0.2 MPa, and a heat sealing time of 1 second. The resulting heat sealed sample was cut into test pieces having a sealing width of 15 mm. The heat seal strength was measured with a distance of 20 mm between chucks for holding a sample at a tensile rate of 200 mm/min, using a tensile tester "AGS-KNX" (manufactured by Shimadzu Corporation). The heat seal strength was expressed as a strength per 15 mm of sealing width (N/15mm).

[Water contact angle]

A water contact angle of the surface of the anti-fogging layer of the laminated film was measured using a contact angle meter "PORTABLE CONTACT ANGLE METER PCA-1" (manufactured by Kyowa Interface Science Co., Ltd.) under conditions of 5°C and 50% R.H. The angle between the surface of the water droplet and the surface of the anti-fogging layer 5 seconds after placing a water droplet was measured on the condition that a water droplet volume was 1 μl per measurement. A half-angle method was employed to read the water contact angle. The water contact angle was measured at 10 points per sample, and the average of the measured values was determined to be a water contact angle of the sample.

[Evaluation of blocking resistance]

Two pieces for evaluation, each having dimensions of 15 cm × 15 cm, were cut out from the laminated film. The substrate layer surface of the first piece for evaluation and the anti-fogging layer surface of the second piece for evaluation were stacked, and the stacked pieces were placed at 40°C for 1 week under a load of 450 kgf/m$^2$ applied from above. Subsequently, the stacked pieces were taken out and cut to prepare a test piece having 15 mm width for evaluation. Then, the peel strength between the substrate layer and the anti-fogging layer of the test piece was measured with a distance of 20 mm between chucks for holding at a tensile rate of 200 mm/min, using a tensile tester "AGS-KNX" (manufactured by Shimadzu Corporation). The peel strength was expressed as a strength per 15 mm (N/15mm).

[Impact strength]

The strength of the laminated film against impact by punching under conditions of 5°C and 50% R.H. was measured using an impact tester (manufactured by Toyo Seiki Seisaku-sho, Ltd.). The impact head had a hemispherical diameter of 1•2 inch.

[Tear strength]

The tear strength of the laminated film was measured using a light-load tearing tester (manufactured by Toyo Seiki Seisaku-sho, Ltd.) in accordance with JISK 7128-2. A slit formed at the laminated film had a length of 12.7 mm.

[Orientation coefficient]

A square-shaped sample having a side of 5 mm was cut out from the laminated film. The refractive index in the longitudinal direction (Nx), the refractive index in the width direction (Ny), and the refractive index in the thickness direction (Nz) of the laminated film were determined by measuring the sample with an Abbe refractometer (NAR-1T, manufactured by ATAGO CO.,LTD.) using D-line of sodium as a light source and diiodomethane as a contact liquid in accordance with method A of JIS K 7142: 1996. The orientation coefficient was calculated according to the following Equation (1).

$$\text{Equation (1): Orientation coefficient} = \{Nx - (Ny + Nz) / 2\} / \{Ny - (Nx + Nz) / 2\}$$

[Thickness variation]

First long strip-shaped samples each having a length of 200 mm and a width of 40 mm were cut out from five locations at the laminated film along the TD direction, and second long strip-shaped samples each having a length of 200 mm and a width of 40 mm were cut out from five locations at the laminated film along the MD direction. Each of the samples was measured at points at an interval of 0.5 mm and a rate of 5 m/min using a continuous contact-type thickness gauge (manufactured by MIKURON). The standard deviation and average thickness were obtained from the measured thicknesses in each sample, and standard deviations and average thicknesses in five locations were averaged in each direction of the TD direction and the MD direction, and each of obtained values was substituted into the following Equation (3), and obtained thickness variation in the TD direction and obtained thickness variation in the MD direction were averaged and determined to be a thickness variation (%) of the laminated film.

Equation (3): Thickness variation (%) = {(standard deviation of thickness) / (average thickness)} × 100

[Evaluation of anti-fogging property]

A square-shaped test piece having a side of 30 cm was cut out from the laminated film. Hot water at 50°C of 300 mL was poured into a plastic container (size: 500 mL, approximate diameter of mouth part: 10 cm), then the mouth part of the plastic container was covered with the test piece in such a manner that the anti-fogging layer surface of the test piece would face the hot water, and the test piece was taken as a sample for evaluation. The mouth part and the test piece were fastened tightly and sealed with a rubber band. Then, the sample for evaluation was placed under a condition of 5°C for 30 minutes, and water droplets adhering on a lid material, i.e., the sample for evaluation, were visually evaluated according to the following criteria.

Judgement "Y": Less than 1/4 of the total area of the mouth part was fogged by water droplets.

Judgement "N": 1/4 or more of the total area of the mouth part was fogged by water droplets.

[Ease of opening]

The laminated film was placed on an A-PET container having dimensions and a shape shown in Fig. 4 in such a manner that the anti-fogging layer surface would face the container, and the laminated film was adhered to the container by heat sealing from above of the laminated film. The heat sealing was conducted at any temperature of 120°C, 140°C, 160°C, and 180°C, a pressure of 0.2 MPa, and a heat sealing time of 1 second. Then, the laminated film was removed by hand and the ease of opening was evaluated by tactile impression according to the following criteria.

Judgement "A": The laminated film was adhered sufficiently and was easily removed by hand.

Judgement "B": The laminated film was adhered insufficiently and was removed without effort by hand.

Judgement "C": The laminated film was adhered too strongly to be easily removed by hand.

Judgement "D": The laminated film was torn when opened by hand.

<Production example>

(1) Polyester A-1

Into an esterification reaction vessel, 55 parts by mass of dimethyl terephthalate, 15 parts by mass of dimethyl isophthalate, 30 parts by mass of dimethyl sebacate, 30 parts by mass of ethylene glycol, and 30 parts by mass of 2,2-dimethyl-1,3-propanediol were charged, and ester exchange reaction was conducted for 4 hours while the reaction system was heated to 230°C. Upon completion of the ester exchange reaction, inside of the reaction system was vacuumed down to 10 torr over 60 minutes while being heated to 250°C, and polycondensation reaction was carried out at 250°C for 60 minutes. Then, nitrogen was flown into the reaction system to break vacuum and complete the polycondensation reaction. After the reaction was complete, the resulting polyester resin was taken out and cooled to obtain polyester A-1. The polyester A-1 had a glass transition temperature of 7°C.

(2) Polyester A-2

Into an esterification reaction vessel, 70 parts by mass of dimethyl terephthalate, 30 parts by mass of dimethyl sebacate, 30 parts by mass of ethylene glycol, and 70 parts by mass of propylene glycol were charged, and ester exchange reaction was conducted for 4 hours while the reaction system was heated to 230°C. Upon completion of the ester exchange reaction, inside of the reaction system was vacuumed down to 10 torr over 60 minutes while being heated to 250°C, and polycondensation reaction was carried out at 250°C for 60 minutes. Then, nitrogen was flown into the reaction system to break vacuum and complete the polycondensation reaction. After the reaction was complete, the resulting polyester resin was taken out and cooled to obtain polyester A-2. The polyester A-2 had a glass transition temperature of 16°C.

(3) Polyester A-3

Into an esterification reaction vessel, 45 parts by mass of dimethyl terephthalate, 39 parts by mass of dimethyl isophthalate, 16 parts by mass of dimethyl sebacate, 75 parts by mass of ethylene glycol, and 25 parts by mass of 2,2-dimethyl-1,3-propanediol were charged, and ester exchange reaction was conducted for 4 hours while the reaction system was heated to 230°C. Upon completion of the ester exchange reaction, inside of the reaction system was vacuumed down to 10 torr over 60 minutes while being heated to 250°C, and polycondensation reaction was carried out at 250°C for 60 minutes. Then, nitrogen was flown into the reaction system to break vacuum and complete the polycondensation reaction. After the reaction was complete, the resulting polyester resin was taken out and cooled to obtain polyester A-3. The polyester A-3 had a glass transition temperature of 32°C.

(4) Polyester B-1

Into an esterification reaction vessel, 45 parts by mass of dimethyl terephthalate, 45 parts by mass of dimethyl isophthalate, 10 parts by mass of dimethyl sebacate, 50 parts by mass of ethylene glycol, and 50 parts by mass of propylene glycol were charged, and ester exchange reaction was conducted for 4 hours while the reaction system was heated to 230°C. Upon completion of the ester exchange reaction, inside of the reaction system was vacuumed down to 10 torr over 60 minutes while being heated to 250°C, and polycondensation reaction was carried out at 250°C for 60 minutes. Then, nitrogen was flown into the reaction system to break vacuum and complete the polycondensation reaction. After the reaction was complete, the resulting polyester resin was taken out and cooled to obtain polyester B-1. The polyester B-1 had a glass transition temperature of 47°C.

(5) Polyester B-2

Into an esterification reaction vessel, 50 parts by mass of dimethyl terephthalate, 50 parts by mass of dimethyl isophthalate, 50 parts by mass of ethylene glycol, and 50 parts by mass of 2,2-dimethyl-1,3-propanediol were charged, and ester exchange reaction was conducted for 4 hours while the reaction system was heated to 230°C. Upon completion of the ester exchange reaction, inside of the reaction system was vacuumed down to 10 torr over 60 minutes while being heated to 250°C, and polycondensation reaction was carried out at 250°C for 60 minutes. Then, nitrogen was flown into the reaction system to break vacuum and complete the polycondensation reaction. After the reaction was complete, the resulting polyester resin was taken out and cooled to obtain polyester B-2. The polyester B-2 had a glass transition temperature of 67°C.

Physical properties of polyesters A-1, A-2, A-3, B-1, and B-2 are presented in Table 1.

[Table 1]

| | | | Unit | Polyester resin | | | | |
|---|---|---|---|---|---|---|---|---|
| | | | | A-1 | A-2 | A-3 | B-1 | B-2 |
| Composition | Polycarboxylic acid components | Terephthalic acid | mol% | 65 | 70 | 45 | 45 | 50 |
| | | Isophthalic acid | mol% | 15 | - | 39 | 45 | 60 |
| | | Sebacic acid | mol% | 30 | 30 | 16 | 10 | - |
| | Polyol components | Ethylene glycol | mol% | 60 | 30 | 75 | 60 | 60 |
| | | Propylene glycol | mol% | - | 70 | - | 50 | - |
| | | 2,2-Di-methyl-1,3-pro-panediol | mol% | 60 | - | 26 | - | 60 |
| Physical properties | | Reduced viscosity | dl/g | 1.0 | 0.6 | 0.8 | 0.6 | 0.6 |
| | | Number average molecular weight | - | 30000 | 17000 | 32000 | 16000 | 18000 |
| | | Glass transition temperature | °C | 7 | 16 | 32 | 47 | 67 |

(6) Polyester C: Biomass-derived polyester resin

As the raw material ethylene glycol, monoethylene glycol was used. In the production of the monoethylene glycol, sugarcane was fermented to produce bioethanol, then the bioethanol was dehydrated to produce bioethylene, and monoethylene glycol was produced from the bioethylene. Petroleum-derived dimethyl terephthalate was used as dimethyl terephthalate. Polyester C having an intrinsic viscosity of 0.69 dl/g, a degree of biomass of 20%, and a raw material composition of terephthalic acid // ethylene glycol = 100 // 100 (mol%) was produced.

(7) Polyester D: Petroleum-derived polyester resin

A polyester resin derived from fossil fuel, having an intrinsic viscosity of 0.62 dl/g and a raw material composition of terephthalic acid // ethylene glycol = 100 // 100 (mol%), was used.

[Example 1]

Into an extruder, 100 parts by mass of polyester C and 0.1 parts by mass of porous silica particles were charged, and the resin was melted at 280°C in the extruder. The melted resin containing the porous silica particles was then cast from a T-die set at 280°C and adhered onto a cooling roll set at 20°C by electrostatic adhesion method to form a single-layered unstretched sheet.

Subsequently, the resulting unstretched sheet was stretched at 115°C by 3.5 times in the MD direction, then the monoaxially stretched sheet was introduced into a tenter capable of stretching in a pattern of multi-stage stretching, and the monoaxially stretched film was stretched in the TD direction by 4.0 times. Three-stage stretching was conducted for the multi-stage stretching, and the monoaxially stretched sheet was stretched at 115°C in the first stage, then stretched at 112°C in the second stage, and further stretched at 109°C in the third stage. Between stages of stretching, each stretching pattern in which a film is maintained at a fixed length was provided. Right after the stretching in the TD direction, the biaxially stretched film was subjected to heat fixing at 220°C for 3 seconds and a 7% relaxation treatment for 1 second, and a biaxially oriented polyester film having a thickness of 25 $\mu$m was obtained. The biaxially oriented polyester film was used as a substrate layer.

Coating agent (A) was obtained by heating and stirring ethyl acetate solution containing 75% by mass of polyester A-1, 19% by mass of polyester B-2, 5% by mass of anti-fogging agent C-1 (Riquemar L-71-D, nonionic surfactant, HLB: 7.3, manufactured by Riken Vitamin), and 1% by mass of an anti-blocking agent D (SYLOID C-812, amorphous silica, manufactured by WR Grace & Co.). The coating agent was off-line coated to the substrate layer so as to have a thickness of 2 $\mu$m, and the layer formed by the coating agent was regarded as the anti-fogging layer.

[Example 2]

A laminated film was obtained in the same manner as Example 1 with the exception that the stretching pattern in the TD direction of a biaxially oriented polyester film was changed to a logarithmic form to obtain a substrate layer.

[Example 3]

A laminated film was obtained in the same manner as Example 1 with the exception that the thickness of an anti-fogging layer was changed to 0.3 $\mu$m.

[Example 4]

A laminated film was obtained in the same manner as Example 1 with the exception that the thickness of an anti-fogging layer was changed to 2.9 $\mu$m.

[Examples 5 to 9]

Laminated films were obtained in the same manner as Example 1 with the exception that the compositions of coating agents for anti-fogging layers were changed.

Compositions of coating agents (B) to (L) used in Examples 5 to 9 and Comparative Examples 6 to 11 described later are presented in Table 2. A nonionic surfactant (NOIGEN ES-149D, HLB: 11.5, manufactured by DKS Co. Ltd.) was used as anti-fogging agent C-2.

[Table 2A]

| Solid content (% by mass) | | | Coating agent (A) | Coating agent (B) | Coating agent (C) | Coating agent (D) | Coating agent (E) | Coating agent (F) |
|---|---|---|---|---|---|---|---|---|
| Solid content (% by mass) | Polyester resin A | A-1 (Tg: 7°C) | 75 | 47 | 85 | - | - | 75 |
| | Polyester resin A | A-2 (Tg: 16°C) | - | - | - | 75 | - | - |
| | Polyester resin A | A-3 (Tg: 32°C) | - | - | - | - | 75 | - |
| | Polyester resin B | B-1 (Tg: 47°C) | - | - | - | - | - | 18 |
| | Polyester resin B | B-2 (Tg: 67°C) | 19 | 47 | 9 | 18 | 18 | - |
| | Anti-fogging agent C | C-1 (HLB: 7.3) | 5 | 5 | 5 | 5 | 5 | 5 |
| | Anti-fogging agent C | C-2 (HLB: 11.5) | - | - | - | - | - | - |
| | Anti-blocking agent D | | 1 | 1 | 1 | 1 | 1 | 1 |
| Composition ratio | Polyester resin | A/B | 80/20 | 50/50 | 90/10 | 80/20 | 80/20 | 80/20 |

16

[Table 2B]

| | | | Coating agent (G) | Coating agent (H) | Coating agent (I) | Coating agent (J) | Coating agent (K) | Coating agent (L) |
|---|---|---|---|---|---|---|---|---|
| Solid content (% by mass) | Polyester resin A | A-1 (Tg: 7°C) | 40 | 90 | - | 75 | 80 | 94 |
| | | A-2 (Tg: 16°C) | - | - | - | - | - | - |
| | | A-3 (Tg: 32°C) | - | - | - | - | - | - |
| | Polyester resin B | B-1 (Tg: 47°C) | - | - | 75 | - | - | - |
| | | B-2 (Tg: 67°C) | 54 | 4 | 18 | 18 | 19 | - |
| | Anti-fogging agent C | C-1 (HLB: 7.3) | 5 | 5 | 5 | - | - | 5 |
| | | C-2 (HLB: 11.5) | - | - | - | 5 | - | - |
| | Anti-blocking agent D | | 1 | 1 | 1 | 1 | 1 | 1 |
| Composition ratio | Polyester resin | A/B | 43/57 | 96/4 | 0/100 | 80/20 | 80/19 | 100/0 |

Physical properties and evaluation results of the laminated films obtained in Examples are presented in Table 3.

[Table 3A]

| | | | Unit | Example 1 | Example 2 | Example 3 | Example 4 | Example 5 |
|---|---|---|---|---|---|---|---|---|
| Structure of laminated film | Substrate layer | Thickness | μm | 25 | 25 | 25 | 26 | 26 |
| | | Degree of biomass | % | 20 | 20 | 20 | 20 | 20 |
| | Stretching ratio | MD/TD | times | 3.5/4.0 | 3.5/4.0 | 3.5/4.0 | 3.5/4.0 | 3.5/4.0 |
| | Stretching form in TD direction | | - | Multi-stage | Logarithmic | Multi-stage | Multi-stage | Multi-stage |
| | Stretching temperature in TD direction | First stage | °C | 115 | 115 | 115 | 115 | 115 |
| | | Second stage | | 112 | | 112 | 112 | 112 |
| | | Third stage | | 109 | | 109 | 109 | 109 |
| | Anti-fogging layer | Coating agent | - | (A) | (A) | (A) | (A) | (B) |
| | | Thickness | μm | 2.0 | 2.0 | 0.3 | 2.9 | 2.0 |
| Physical properties of laminated film | Haze | | % | 4.1 | 4.2 | 2.2 | 7.1 | 4.5 |
| | Heat seal strength | 120°C | N/15mm | 4.6 | 4.4 | 2.2 | 6.6 | 10.8 |
| | | 140°C | | 4.1 | 4.0 | 2.2 | 6.4 | 11.2 |
| | | 160°C | | 4.3 | 4.2 | 2.1 | 6.5 | 11.5 |
| | | 180°C | | 4.5 | 4.3 | 2.6 | 6.9 | 11.2 |
| | Water contact angle | | deg. | 20 | 21 | 20 | 21 | 25 |
| | Blocking strength | | N/15mm | 0.4 | 0.3 | 0.1 | 0.9 | 0 |
| | Impact strength | | J | 0.64 | 0.66 | 0.71 | 0.65 | 0.66 |
| | Tear strength | MD | mN | 235 | 222 | 233 | 235 | 223 |
| | | TD | | 162 | 155 | 162 | 164 | 166 |
| | | MD/TD | - | 1.45 | 1.43 | 1.44 | 1.43 | 1.34 |
| | Orientation coefficient | | - | 0.72 | 0.71 | 0.72 | 0.79 | 0.75 |
| | Thickness variation | | % | 3.0 | 3.1 | 2.1 | 4.4 | 2.9 |
| Evaluation of anti-fogging property | | | - | Y | Y | Y | Y | Y |
| Evaluation of ease of opening | | 120°C | - | A | A | A | A | A |
| | | 140°C | - | A | A | A | A | A |
| | | 160°C | - | A | A | A | A | A |
| | | 180°C | - | A | A | A | A | A |

[Table 3B]

| | | | Unit | Example 6 | Example 7 | Example 8 | Example 9 |
|---|---|---|---|---|---|---|---|
| Structure of laminated film | Substrate layer | Thickness | μm | 25 | 25 | 25 | 25 |
| | | Degree of biomass | % | 20 | 20 | 20 | 20 |
| | Stretching ratio | MD/TD | times | 3.5/4.0 | 3.5/4.0 | 3.5/4.0 | 3.5/4.0 |
| | Stretching form in TD direction | | - | Multi-stage | Multi-stage | Multi-stage | Multi-stage |
| | Stretching temperature in TD direction | First stage | °C | 115 | 115 | 115 | 115 |
| | | Second stage | | 112 | 112 | 112 | 112 |
| | | Third stage | | 109 | 109 | 109 | 109 |
| | Anti-fogging layer | Coating agent | - | (C) | (D) | (E) | (F) |
| | | Thickness | μm | 2.0 | 2.0 | 2.0 | 2.0 |
| Physical properties of laminated film | Haze | | % | 3.9 | 4.1 | 4.3 | 4.4 |
| | Heat seal strength | 120°C | N/15mm | 2.2 | 6.6 | 8.1 | 3.3 |
| | | 140°C | | 2.4 | 6.9 | 7.9 | 3.5 |
| | | 160°C | | 3.1 | 7.1 | 8.8 | 4.1 |
| | | 180°C | | 2.8 | 6.8 | 8.5 | 3.9 |
| | Water contact angle | | deg. | 22 | 27 | 24 | 20 |
| | Blocking strength | | N/15mm | 0.8 | 0.2 | 0 | 0.7 |
| | Impact strength | | J | 0.71 | 0.62 | 0.65 | 0.71 |
| | Tear strength | MD | mN | 222 | 231 | 233 | 238 |
| | | TD | | 164 | 158 | 159 | 166 |
| | | MD/TD | - | 1.35 | 1.46 | 1.47 | 1.43 |
| | Orientation coefficient | | - | 0.71 | 0.72 | 0.71 | 0.69 |
| | Thickness variation | | % | 3.5 | 2.8 | 3.0 | 3.3 |
| Evaluation of anti-fogging property | | | - | Y | Y | Y | Y |
| Evaluation of ease of opening | 120°C | | - | A | A | A | A |
| | 140°C | | - | A | A | A | A |
| | 160°C | | - | A | A | A | A |
| | 180°C | | - | A | A | A | A |

[Comparative Example 1]

A laminated film was obtained in the same manner as Example 1 with the exception that the stretching pattern in the TD direction of a biaxially oriented polyester film was changed to a straight form to obtain a substrate layer. The resulting laminated film had low tear strength in the TD direction, and the film broke when opened in the ease of opening evaluation; hence, the laminated film was unsatisfactory.

[Comparative Example 2]

A laminated film was obtained in the same manner as Example 1 with the exception that the stretching pattern in the TD direction of a biaxially oriented polyester film was changed to a straight form and a stretching ratio in the TD direction was changed to 3.5 times to obtain a substrate layer. The resulting laminated film had low blocking resistance and decreased impact strength.

[Comparative Example 3]

A laminated film was obtained in the same manner as Example 1 with the exception that the stretching pattern in the TD direction of a biaxially oriented polyester film was changed to a straight form, a stretching ratio in the MD direction was changed to 4.0 times, and a stretching ratio in the TD direction was changed to 3.5 times to obtain a substrate layer. The resulting laminated film had low blocking resistance.

[Comparative Example 4]

A laminated film was obtained in the same manner as Example 1 with the exception that the thickness of an anti-fogging layer was changed to 0.2 $\mu$m. The resulting laminated film had a large water contact angle and thus had degraded anti-fogging property, further, the laminated film had low heat seal strength and could not be heat sealed in the ease of opening evaluation; hence, the laminated film was unsatisfactory.

[Comparative Example 5]

A laminated film was produced in the same manner as Example 1 with the exception that the thickness of an anti-fogging layer was changed to 3.2 $\mu$m. The resulting laminated film had low blocking resistance.

[Comparative Example 6]

A laminated film was produced in the same manner as Example 1 with the exception that the composition of the coating agent for an anti-fogging layer was changed. The resulting laminated film had high heat seal strength and thus the laminated film was not easily opened in the ease of opening evaluation; hence, the laminated film was unsatisfactory.

[Comparative Example 7]

A laminated film was produced in the same manner as Example 1 with the exception that the composition of the coating agent for an anti-fogging layer was changed. The resulting laminated film had low blocking resistance, further, the laminated film had low heat seal strength and could not be heat sealed in the ease of opening evaluation; hence, the laminated film was unsatisfactory.

[Comparative Example 8]

A laminated film was produced in the same manner as Example 1 with the exception that the composition of the coating agent for an anti-fogging layer was changed. The resulting laminated film had high heat seal strength and could not be removed easily in the ease of opening evaluation; hence, the laminated film was unsatisfactory.

[Comparative Example 9]

A laminated film was produced in the same manner as Example 1 with the exception that the composition of the coating agent for an anti-fogging layer was changed. The resulting laminated film had low heat seal strength and could not be heat sealed in the ease of opening evaluation; hence, the laminated film was unsatisfactory.

[Comparative Example 10]

A laminated film was produced in the same manner as Example 1 with the exception that the composition of the coating agent for an anti-fogging layer was changed. The resulting laminated film had a large water contact angle and had degraded anti-fogging property.

[Comparative Example 1]

A laminated film was produced in the same manner as Example 1 with the exception that the composition of the coating agent for an anti-fogging layer was changed. The resulting laminated film had low blocking resistance, further, the laminated film had low heat seal strength and could not be heat sealed in the ease of opening evaluation; hence, the laminated film was unsatisfactory.

[Comparative Example 12]

A laminated film was produced in the same manner as Example 1 with the exception that the resin composition for forming the substrate layer contained 100 parts by mass of polyester D and 0.1 parts by mass of porous silica particles. Since the resulting laminated film did not contain a biomass-derived raw material, the laminated film was unsatisfactory from the viewpoint of the environment.

Physical properties and evaluation results of the laminated films obtained in Comparative Examples are presented in Table 4.

[Table 4A]

| | | | Unit | Comparative Example 1 | Comparative Example 2 | Comparative Example 3 | Comparative Example 4 | Comparative Example 5 | Comparative Example 6 |
|---|---|---|---|---|---|---|---|---|---|
| Structure of laminated film | Substrate layer | Thickness | μm | 25 | 26 | 25 | 25 | 26 | 26 |
| | | Degree of biomass | % | 20 | 20 | 20 | 20 | 20 | 20 |
| | Stretching ratio | MD/TD | times | 3.5/4.0 | 3.5/3.5 | 4.0/3.5 | 3.5/4.0 | 3.5/4.0 | 3.5/4.0 |
| | Stretching form in TD direction | | - | Straight | Straight | Straight | Multi-stage | Multi-stage | Multi-stage |
| | Stretching temperature in TD direction | First stage | °C | 115 | 115 | 116 | 115 | 115 | 115 |
| | | Second stage | | | | | 112 | 112 | 112 |
| | | Third stage | | | | | 109 | 109 | 109 |
| | Anti-fogging layer | Coating agent | - | (A) | (A) | (A) | (A) | (A) | (G) |
| | | Thickness | μm | 2.0 | 2.0 | 2.0 | 0.2 | 3.2 | 2.0 |
| Physical properties of laminated film | Haze | | % | 4.1 | 5.5 | 5.1 | 2.0 | 7.5 | 4.4 |
| | Heat seal strength | 120°C | N/15mm | 4.1 | 4.3 | 4.4 | 1.9 | 7.7 | 12.2 |
| | | 140°C | | 4.5 | 4.0 | 4.3 | 1.8 | 7.5 | 12.5 |
| | | 160°C | | 4.5 | 4.8 | 5.1 | 1.1 | 7.6 | 12.4 |
| | | 180°C | | 4.4 | 4.9 | 4.4 | 1.5 | 7.6 | 13.0 |
| | Water contact angle | | deg. | 19 | 19 | 22 | 62 | 22 | 23 |
| | Blocking strength | | N/15mm | 0 | 1.5 | 1.1 | 0 | 1.2 | 0 |
| | Impact strength | | J | 0.70 | 0.44 | 0.66 | 0.61 | 0.71 | 0.61 |
| | Tear strength | MD | mN | 200 | 222 | 120 | 222 | 223 | 246 |
| | | TD | | 95 | 160 | 190 | 149 | 155 | 166 |
| | | MD/TD | - | 2.11 | 1.48 | 0.63 | 1.49 | 1.44 | 1.48 |

(continued)

|  | | Unit | Comparative Example 1 | Comparative Example 2 | Comparative Example 3 | Comparative Example 4 | Comparative Example 5 | Comparative Example 6 |
|---|---|---|---|---|---|---|---|---|
|  | Orientation coefficient | - | 0.61 | 0.99 | 1.22 | 0.75 | 0.78 | 0.81 |
|  | Thickness variation | % | 2.2 | 6.3 | 6.8 | 2.1 | 5.1 | 2.8 |
| Evaluation of anti-fogging property | | - | Y | Y | Y | N | Y | Y |
| Evaluation of ease of opening | 120°C | - | D | A | A | B | A | C |
|  | 140°C | - | D | A | A | B | A | C |
|  | 160°C | - | D | A | A | B | A | C |
|  | 180°C | - | D | A | A | B | A | C |

[Table 4B]

| | | | Unit | Comparative Example 7 | Comparative Example 8 | Comparative Example 9 | Comparative Example 10 | Comparative Example 11 | Comparative Example 12 |
|---|---|---|---|---|---|---|---|---|---|
| Structure of laminated film | Substrate layer | Thickness | μm | 25 | 26 | 25 | 25 | 26 | 26 |
| | | Degree of biomass | % | 20 | 20 | 20 | 20 | 20 | 0 |
| | Stretching ratio | MD/TD | times | 3.5/4.0 | 3.5/4.0 | 3.6/4.0 | 3.5/4.0 | 3.5/4.0 | 3.5/4.0 |
| | Stretching form in TD direction | | - | Multi-stage | Multi-stage | Multi-stage | Multi-stage | Multi-stage | Multi-stage |
| | Stretching temperature in TD direction | First stage | °C | 115 | 116 | 116 | 115 | 116 | 115 |
| | | Second stage | | 112 | 112 | 112 | 112 | 112 | 112 |
| | | Third stage | | 109 | 109 | 109 | 109 | 109 | 109 |
| | Anti-fogging layer | Coating agent | - | (H) | (I) | (J) | (K) | (L) | (A) |
| | | Thickness | μm | 2.0 | 2.0 | 2.0 | 2.0 | 2.0 | 2.0 |
| Physical properties of laminated film | Haze | | % | 3.9 | 4.4 | 10.3 | 3.1 | 3.5 | 4.3 |
| | Heat seal strength | 120°C | N/15mm | 1.5 | 11.9 | 1.2 | 4.5 | 1.1 | 4.6 |
| | | 140°C | | 1.4 | 12.2 | 1.2 | 5.1 | 1.5 | 4.0 |
| | | 160°C | | 1.5 | 12.4 | 1.1 | 5.3 | 1.7 | 4.2 |
| | | 180°C | | 1.3 | 12.5 | 0.9 | 6.3 | 1.4 | 4.2 |
| | Water contact angle | | deg. | 25 | 26 | 8 | 63 | 23 | 21 |
| | Blocking strength | | N/15mm | 1.1 | 0 | 0.3 | 0.6 | 1.8 | 0.2 |
| | Impact strength | | J | 0.77 | 0.63 | 0.65 | 0.66 | 0.73 | 0.66 |

EP 4 494 871 A1

(continued)

| | | | Unit | Comparative Example 7 | Comparative Example 8 | Comparative Example 9 | Comparative Example 10 | Comparative Example 11 | Comparative Example 12 |
|---|---|---|---|---|---|---|---|---|---|
| | Tear strength | MD | mN | 234 | 224 | 233 | 243 | 237 | 233 |
| | | TD | | 167 | 161 | 167 | 167 | 167 | 159 |
| | | MD/TD | - | 1.49 | 1.48 | 1.40 | 1.46 | 1.42 | 1.47 |
| | Orientation coefficient | | - | 0.77 | 0.71 | 0.72 | 0.78 | 0.71 | 0.71 |
| | Thickness variation | | % | 4.3 | 3.1 | 2.9 | 3.3 | 4.3 | 2.9 |
| Evaluation of anti-fogging property | | | - | Y | Y | Y | N | Y | Y |
| Evaluation of ease of opening | 120°C | | - | B | A | B | A | B | A |
| | 140°C | | - | B | C | B | A | B | A |
| | 160°C | | - | B | C | B | A | B | A |
| | 180°C | | - | B | C | B | A | B | A |

**EP 4 494 871 A1**

**Claims**

1. A laminated film comprising at least a substrate layer and an anti-fogging layer, wherein the laminated film satisfies the following (a) to (g):

    (a) when 15 mm wide test pieces are each formed by a method including heat sealing an anti-fogging layer surface of the laminated film to a 200 $\mu$m thick unstretched polyethylene terephthalate sheet at any temperature of 120°C, 140°C, 160°C, and 180°C at 0.2 MPa for 1 second, a heat seal strength between the laminated film and the unstretched polyethylene terephthalate sheet in each of the test pieces is 2.0 N/15mm or more and 12.0 N/15mm or less;
    (b) a water contact angle of 50° or less 5 seconds after placing 1 $\mu$l droplet of distilled water on a surface of the anti-fogging layer under conditions of 5°C and 50% R.H.;
    (c) when an anti-fogging layer surface of a piece of the laminated film and a substrate layer surface of another piece of the laminated film are stacked, placed at 40°C under a load of 450 kgf/m$^2$ for 1 week, and formed to be a 15 mm wide test piece, a peel strength between the piece and the another piece of the test piece is 1 N/15mm or less;
    (d) an impact strength by pendulum impact test is 0.5 J or more under a condition of 5°C;
    (e) a tear strength is 100 mN or more in both of an MD direction and a TD direction of the laminated film under a condition of 5°C;
    (f) a thickness of the anti-fogging layer is 0.3 $\mu$m or more and less than 3.0 $\mu$m; and,
    (g) the substrate layer comprises a polyester resin containing a plant-derived ethylene glycol unit as a diol unit.

2. The laminated film according to claim 1, wherein the substrate layer has a degree of biomass of 10% or more and 20% or less.

3. The laminated film according to claim 1 or 2, wherein a ratio (tear strength $_{MD}$/tear strength $_{TD}$) of a tear strength in the MD direction with respect to a tear strength in the TD direction of the laminated film is 0.6 or more and 1.5 or less under a condition of 5°C.

4. The laminated film according to any one of claims 1 to 3, wherein the laminated film has an orientation coefficient calculated according to Equation (1) from refractive indexes measured with an Abbe refractometer of 0.6 or more and 1.5 or less:

$$\text{Equation (1): Orientation coefficient} = \{Nx - (Ny + Nz) / 2\} / \{Ny - (Nx + Nz) / 2\}$$

where Nx is a refractive index in the MD direction of the film, Ny is a refractive index in the TD direction of the film, and Nz is a refractive index in a thickness direction of the film.

5. The laminated film according to any one of claims 1 to 4, wherein the substrate layer is a biaxially oriented polyester film.

6. The laminated film according to any one of claims 1 to 5, wherein the anti-fogging layer contains at least a polyester resin (A) having a glass transition temperature Tg of 0°C or higher and 40°C or lower, and a polyester resin (B) having a glass transition temperature Tg of 41 °C or higher and 80°C or lower.

7. The laminated film according to claim 6, wherein a mass ratio of the polyester resin (A) to the polyester resin (B) in resins constituting the anti-fogging layer is 50/50 to 90/10.

8. The laminated film according to claim 6 or 7, wherein the anti-fogging layer contains a nonionic surfactant.

9. The laminated film according to claim 8, wherein the nonionic surfactant has an HLB value of 3 or more and 10 or less.

10. The laminated film according to any one of claims 1 to 9, wherein the laminated film has a thickness variation of 5% or less.

11. The laminated film according to any one of claims 1 to 10, wherein the laminated film has a haze of less than 10%.

12. The laminated film according to any one of claims 1 to 11, wherein the laminated film comprises the adhesion layer, the

26

substrate layer, and a printed layer.

13. A lid material for a food packaging container, comprising the laminated film according to any one of claims 1 to 12.

14. A food packaging container comprising the lid material according to claim 13.

[FIG. 1]

| Preheating zone | Stretching zone | Heat fixing zone |

[FIG. 2]

| Preheating zone | Stretching zone 1 | Stretching zone 2 | Heat fixing zone |

[FIG. 3]

Preheating zone | Stretching zone | Heat fixing zone

[FIG. 4]

145 mm

145 mm

Lid material
seal portion
8 mm

80 mm

100 mm

100°

100 mm

## INTERNATIONAL SEARCH REPORT

| International application No. |
|---|
| **PCT/JP2023/009931** |

**A. CLASSIFICATION OF SUBJECT MATTER**

*B32B 27/36*(2006.01)i; *B32B 27/00*(2006.01)i; *B32B 27/18*(2006.01)i; *B65D 65/40*(2006.01)i; *C08J 7/054*(2020.01)i
FI:   B32B27/36; B32B27/00 H; B32B27/18 C; B65D65/40 D; C08J7/054 CFD

According to International Patent Classification (IPC) or to both national classification and IPC

**B. FIELDS SEARCHED**

Minimum documentation searched (classification system followed by classification symbols)
    B32B27/36; B32B27/00; B32B27/18; B65D65/40; C08J7/054

Documentation searched other than minimum documentation to the extent that such documents are included in the fields searched

    Published examined utility model applications of Japan 1922-1996
    Published unexamined utility model applications of Japan 1971-2023
    Registered utility model specifications of Japan 1996-2023
    Published registered utility model applications of Japan 1994-2023

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | WO 2019/064973 A1 (FUJIFILM CORP) 04 April 2019 (2019-04-04) <br> entire text | 1-14 |
| A | JP 2013-60021 A (DUPONT TEIJIN FILMS US LP) 04 April 2013 (2013-04-04) <br> entire text | 1-14 |
| A | JP 2020-73627 A (MITSUBISHI POLYESTER FILM GMBH) 14 May 2020 (2020-05-14) <br> entire text | 1-14 |
| A | JP 2020-510708 A (BOSTIK, INC) 09 April 2020 (2020-04-09) <br> entire text | 1-14 |
| A | WO 2021/111941 A1 (TOYOBO CO., LTD.) 10 June 2021 (2021-06-10) <br> entire text | 1-14 |
| A | JP 2021-133679 A (SUMITOMO BAKELITE CO) 13 September 2021 (2021-09-13) <br> entire text | 1-14 |

☐ Further documents are listed in the continuation of Box C.      ☑ See patent family annex.

| | |
|---|---|
| * Special categories of cited documents: <br> "A" document defining the general state of the art which is not considered to be of particular relevance <br> "E" earlier application or patent but published on or after the international filing date <br> "L" document which may throw doubts on priority claim(s) or which is cited to establish the publication date of another citation or other special reason (as specified) <br> "O" document referring to an oral disclosure, use, exhibition or other means <br> "P" document published prior to the international filing date but later than the priority date claimed | "T" later document published after the international filing date or priority date and not in conflict with the application but cited to understand the principle or theory underlying the invention <br> "X" document of particular relevance; the claimed invention cannot be considered novel or cannot be considered to involve an inventive step when the document is taken alone <br> "Y" document of particular relevance; the claimed invention cannot be considered to involve an inventive step when the document is combined with one or more other such documents, such combination being obvious to a person skilled in the art <br> "&" document member of the same patent family |

| Date of the actual completion of the international search | Date of mailing of the international search report |
|---|---|
| **05 June 2023** | **20 June 2023** |

| Name and mailing address of the ISA/JP | Authorized officer |
|---|---|
| **Japan Patent Office (ISA/JP)** <br> **3-4-3 Kasumigaseki, Chiyoda-ku, Tokyo 100-8915** <br> **Japan** | |
| | Telephone No. |

Form PCT/ISA/210 (second sheet) (January 2015)

**INTERNATIONAL SEARCH REPORT**
**Information on patent family members**

International application No.

**PCT/JP2023/009931**

| Patent document cited in search report | | | Publication date (day/month/year) | Patent family member(s) | | | Publication date (day/month/year) |
|---|---|---|---|---|---|---|---|
| WO | 2019/064973 | A1 | 04 April 2019 | (Family: none) | | | |
| JP | 2013-60021 | A | 04 April 2013 | US | 2010/0068355 | A1 | |
| | | | | WO | 2008/053205 | A1 | |
| | | | | EP | 2077943 | A1 | |
| | | | | KR | 10-2009-0078348 | A | |
| | | | | CN | 101535047 | A | |
| | | | | BR | PI0716289 | A | |
| JP | 2020-73627 | A | 14 May 2020 | US | 2020/0061897 | A1 | |
| | | | | EP | 3613592 | A1 | |
| | | | | KR | 10-2020-0022351 | A | |
| JP | 2020-510708 | A | 09 April 2020 | US | 2019/0337274 | A1 | |
| | | | | WO | 2018/132442 | A1 | |
| | | | | EP | 3568300 | A1 | |
| | | | | AU | 2018208577 | A | |
| | | | | CA | 3049451 | A | |
| | | | | CN | 110167754 | A | |
| | | | | MX | 2019008268 | A | |
| | | | | KR | 10-2020-0010170 | A | |
| | | | | BR | 112019014293 | A | |
| WO | 2021/111941 | A1 | 10 June 2021 | US | 2022/0410546 | A1 | |
| | | | | EP | 4070954 | A1 | |
| | | | | TW | 202130516 | A | |
| JP | 2021-133679 | A | 13 September 2021 | JP | 6897852 | B1 | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2008179689 A
- JP 2018114992 A
- JP 2017209996 A